(19) Europäisches Patentamt
European Patent Office
Office européen des brevets

(11) EP 3 567 444 A1

(12) **EUROPEAN PATENT APPLICATION**

(43) Date of publication:
13.11.2019 Bulletin 2019/46

(51) Int Cl.:
*G05B 23/02* (2006.01)          *B60W 50/00* (2006.01)
*G07C 5/00* (2006.01)

(21) Application number: 19169949.5

(22) Date of filing: 17.04.2019

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **07.05.2018 JP 2018089493**

(71) Applicant: **TOYOTA JIDOSHA KABUSHIKI KAISHA**
**Toyota-shi, Aichi-ken 471 8571 (JP)**

(72) Inventors:
• UCHIDA, Takehiro
  Toyota-shi, Aichi-ken 471-8571 (JP)
• NAKAMURA, Shigeki
  Toyota-shi, Aichi-ken 471-8571 (JP)

(74) Representative: **Kuhnen & Wacker**
**Patent- und Rechtsanwaltsbüro PartG mbB**
**Prinz-Ludwig-Straße 40A**
**85354 Freising (DE)**

(54) **DIAGNOSTIC DEVICE, DIAGNOSTIC SYSTEM, AND DIAGNOSTIC METHOD**

(57)     A diagnostic device includes: a detection value acquiring unit (110, 150) configured to acquire a detection value of a first device (30) mounted in a first vehicle (1-2, 1-3) which is located within a predetermined range from a second vehicle (1-1); a proper value estimating unit (120, 121) configured to estimate, by using the detection value of the first device (30), a proper value of a detection value of a second device (30) mounted in the second vehicle (1-1), the proper value estimating unit (120, 121) estimating the proper value by performing a first operation not using a weighting or a second operation using a weighting depending on a type of the first device (30); and a diagnosis unit (130) configured to diagnose an operating state of the second device (30) by comparing the detection value of the second device (30) with the proper value.

*FIG. 1*

**Description**

BACKGROUND OF THE INVENTION

1. Field of the Invention

The invention relates to a diagnostic device, a diagnostic system, and a diagnostic method.

2. Description of Related Art

Recently, techniques for detecting a sign of abnormality of a device have been developed. For example, Japanese Unexamined Patent Application Publication No. 2013-008111 (JP 2013-008111 A) discloses an abnormality sign detecting device that includes a first diagnosis means that detects whether there is a sign of abnormality based on a degree of divergence (a degree of abnormality) of diagnosis target data from a case model which has been prepared using sensor data when a mechanical facility operates normally as learning data and a second diagnosis means that detects whether there is a sign of abnormality based on whether values of individual pieces of sensor data are within a predetermined range and selects an individual piece of sensor data which is to be referred to for the second diagnosis means to detect a sign of abnormality based on a degree of contribution indicating a magnitude of contribution to the degree of abnormality when the first diagnosis means has detected a sign of abnormality.

Japanese Unexamined Patent Application Publication No. 2011-185727 (JP 2011-185727 A) discloses a vehicle diagnosing system that performs diagnosis on a vehicle serving as a transmission source of a state value by causing a vehicle diagnosing device to receive a state value indicating an operating state of an onboard device mounted in a vehicle from the vehicle on which diagnosis is to be performed and to determine whether the received state value is within a normal range in a distribution of state values acquired by the vehicle when the onboard device operates normally.

The techniques described in JP 2013-008111 A and JP 2011-185727 A require data when a device on which diagnosis is to be performed is operating normally. However, a value of a device mounted in a vehicle when a device is operating normally may change depending on an external environment such as a road surface shape of a road on which the vehicle is traveling, a gradient of the road, and the weather. Therefore, Japanese Unexamined Patent Application Publication No. 2016-128985 (JP 2016-128985 A) discloses a technique of transmitting and receiving data indicating an operating state of a sensor mounted in a vehicle to and from a neighboring vehicle by vehicle-to-vehicle communication and determining whether the sensor is operating normally.

SUMMARY OF THE INVENTION

In the technique described in JP 2016-128985 A, since index data in which an influence of the external environment is reflected can be acquired by vehicle-to-vehicle communication, it is not necessary to separately acquire information on the external environment and it is possible to minimize the labor and costs for software design. However, detection values of sensors may differ due to causes other than the external environment even in the same external environment depending on the types of the sensors. In this case, it is difficult to correctly detect a sign of abnormality of a sensor.

The invention provides a diagnostic device, a diagnostic system, and a diagnostic method that can accurately detect a sign of abnormality of a device which is mounted in a vehicle.

A diagnostic device according to a first aspect of the invention includes: a detection value acquiring unit configured to acquire a detection value of a first device mounted in a first vehicle which is located within a predetermined range from a second vehicle; a proper value estimating unit configured to estimate, by using the detection value of the first device, a proper value of a detection value of a second device mounted in the second vehicle, the proper value estimating unit estimating the proper value by performing a first operation not using a weighting or a second operation using the weighting depending on a type of the first device; and a diagnosis unit configured to diagnose an operating state of the second device by comparing the detection value of the second device with the proper value.

In the above aspect, the proper value estimating unit may be configured to weight the detection value of the first device based on a vehicle model of the first vehicle when the second operation is performed.

In the above aspect, the proper value estimating unit may be configured to weight the detection value of the first device based on an elapsed time after repair or inspection of the first vehicle has been completed when the second operation is performed.

In the above aspect, the proper value estimating unit may be configured to weight the detection value of the first device based on a distance between the first vehicle and the second vehicle when the second operation is performed.

In the above aspect, the detection value acquiring unit may be configured to acquire the detection value of the first device of each of a plurality of the first vehicles, the first operation may be calculation of an average value of the detection values of the first devices, and the second operation may be calculation of a weighted average value of the detection values of the first devices.

In the above aspect, the detection value acquiring unit may be configured to acquire first information which is information contributing to determination of a weight factor, and the proper value estimating unit may be configured to use the weight factor corresponding to the first information to perform the second operation.

In the above aspect, the first information may include at least one of a vehicle model of the first vehicle, an elapsed time after repair or inspection of the first vehicle has been completed, and a distance between the first vehicle and the second vehicle.

In the above aspect, the detection value acquiring unit may be configured to acquire a proper value of the detection value of the first device, and the proper value estimating unit may be configured to estimate the proper value of the detection value of the second device using the proper value of the detection value of the first device.

In the above aspect, the diagnosis unit may be configured to output the operating state of the second device to an external device.

A diagnostic system according to a second aspect of the invention includes: the diagnostic device according the above aspects; and a server configured to communicate with a vehicle in which the diagnostic device is mounted, wherein the detection value acquiring unit is configured to acquire the detection value of the first device by vehicle-to-vehicle communication only when the vehicle has failed to communicate with the server.

A diagnostic method according to a third aspect of the invention includes: causing a diagnostic device to acquire a detection value of a first device mounted in a first vehicle which is located within a predetermined range from a second vehicle; causing the diagnostic device to estimate, by using the detection value of the first device, a proper value of a detection value of a second device mounted in the second vehicle, the proper value being estimated by performing a first operation not using a weighting or a second operation using the weighting depending on a type of the first device; and causing the diagnostic device to diagnose an operating state of the second device by comparing the detection value of the second device with the proper value.

According to the above aspects of the invention, it is possible to accurately detect a sign of abnormality of a device which is mounted in a vehicle.

BRIEF DESCRIPTION OF THE DRAWINGS

Features, advantages, and technical and industrial significance of exemplary embodiments of the invention will be described below with reference to the accompanying drawings, in which like numerals denote like elements, and wherein:

FIG. 1 is a diagram schematically illustrating a configuration of a vehicle including a diagnostic device according to a first embodiment of the invention;
FIG. 2 is a flowchart illustrating an example of a flow of a diagnostic method using the diagnostic device according to the first embodiment of the invention;
FIG. 3 is a diagram illustrating an example of a configuration of the diagnostic device according to the first embodiment of the invention;
FIG. 4 is a diagram illustrating a diagnosis example using the diagnostic device according to the first embodiment of the invention;
FIG. 5 is a diagram schematically illustrating a configuration of a diagnostic device according to a second embodiment of the invention;
FIG. 6 is a flowchart illustrating an example of a process flow of estimating a proper value in the diagnostic device according to the second embodiment of the invention;
FIG. 7 is a diagram illustrating a diagnosis example using the diagnostic device according to the second embodiment of the invention;
FIG. 8 is a diagram schematically illustrating a configuration of a system including a diagnostic device according to a third embodiment of the invention;
FIG. 9 is a diagram schematically illustrating a configuration of a diagnostic system according to a fourth embodiment of the invention;
FIG. 10 is a flowchart illustrating a first example of a flow of a diagnostic method using the diagnostic system according to the fourth embodiment of the invention; and
FIG. 11 is a flowchart illustrating a second example of a flow of a diagnostic method using the diagnostic system according to the fourth embodiment of the invention.

DETAILED DESCRIPTION OF EMBODIMENTS

Hereinafter, embodiments of the invention will be described in detail with reference to the accompanying drawings.

(First embodiment)

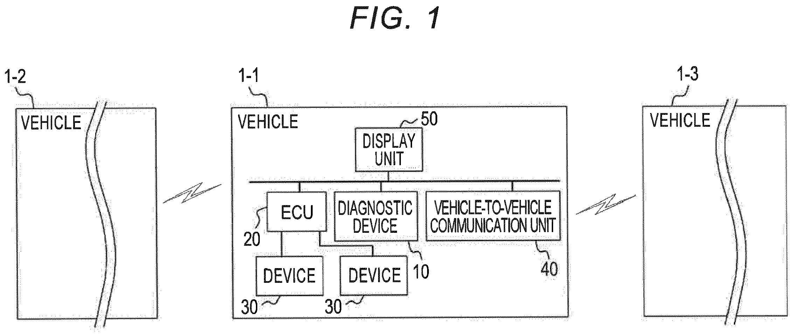

FIG. 1 is a diagram schematically illustrating a configuration of a vehicle including a diagnostic device according to a first embodiment. Each vehicle 1 includes a diagnostic device 10, an electronic control unit (ECU) 20, a device 30, a vehicle-to-vehicle communication unit 40, and a display unit 50. For the purpose of convenience of description, only three vehicles 1-1, 1-2, and 1-3 having the same configuration are illustrated in FIG. 1, and it is assumed in this embodiment that the vehicle 1-1 is defined as a host vehicle (a second vehicle) and the vehicle 1-2 and the vehicle 1-3 are defined as neighboring vehicles (a first vehicle) which are located within a predetermined range from the vehicle 1-1. Here, the predetermined range refers to, for example, a range in which vehicle-to-vehicle communication is possible.

Since a sensor deteriorate over time, a detection value of the sensor may slowly diverge from a normal value. Then, a control value of an actuator based on the detection value of the sensor may diverge from a normal value. Therefore, in the invention, a detection value of a sensor or a control value of an actuator is monitored and diagnosis on the sensor is performed.

The device 30 is a sensor or an actuator, and a detection value of the device 30 refers to a detection value of a sensor (a sensor value) or a control value of an actuator. In the following embodiments of this specification, the device 30 is assumed to be a sensor 30. Various sensors 30 such as an outside air temperature sensor, an intake air temperature sensor, a coolant temperature sensor, a vehicle speed sensor, an $O_2$ sensor, a steering sensor, an air pressure sensor, an ultrasonic sensor, a gyro sensor, and an obstacle sensor are mounted in a vehicle 1. Detection values of the sensors 30 are output to the ECU 20 that performs processing using the detection values.

A plurality of ECUs 20 is mounted in a vehicle 1 and electronically control various operations of the vehicle 1. For example, an engine ECU 20 drives actuators based on information from the sensors 30 such as an intake air temperature sensor, a coolant temperature sensor, a vehicle speed sensor, and an $O_2$ sensor and controls an amount of injected fuel or an injection time of an engine.

The vehicle-to-vehicle communication unit 40 performs direct communication between the vehicles 1 (vehicle-to-vehicle communication) using radio waves of a pre-assigned frequency band, receives detection information of the sensors 30 (a first device) mounted in the neighboring vehicles 1-2 and 1-3 from the neighboring vehicles 1-2 and 1-3, and demodulates the received detection information. The vehicle-to-vehicle communication unit 40 modulates detection information of the sensor 30 (a second device) mounted in the host vehicle 1-1 and transmits the modulated detection information to the neighboring vehicles 1-2 and 1-3. The vehicle-to-vehicle communication unit 40 can communicate with neighboring vehicles which are located within a range in which radio waves can reach and the range in which radio waves reach can be appropriately adjusted by adjusting radio wave intensity. The vehicle-to-vehicle communication unit 40 outputs the received detection information to the diagnostic device 10. The frequency at which the vehicle-to-vehicle communication unit 40 transmits and receives detection information is arbitrary, and when communication with a vehicle has been performed once, communication may not be performed until a predetermined period elapses thereafter in order to prevent a plurality of times of communication with the same vehicle.

The diagnostic device 10 determines whether there is a sign of abnormality such as malfunction in the sensor 30 mounted in the host vehicle 1-1 based on the detection information received through vehicle-to-vehicle communication by the vehicle-to-vehicle communication unit 40.

The display unit 50 is, for example, a panel display or a head-up display and displays diagnosis results based on the diagnostic device 10 or the like.

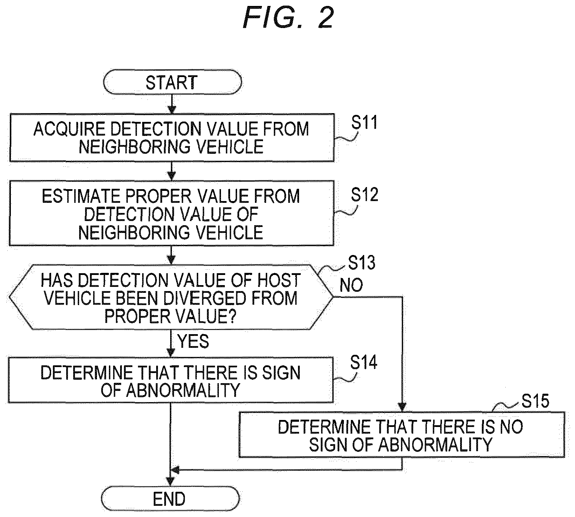

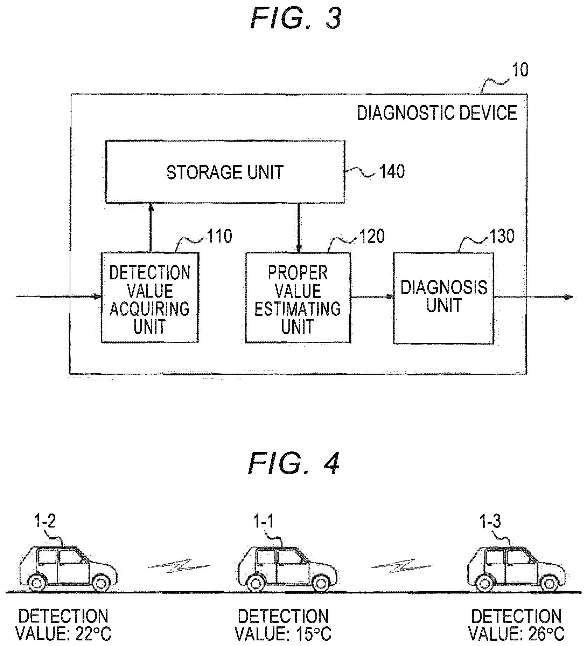

An outline of process details which are performed by the diagnostic device 10 will be first described with reference to FIG. 2 and then details thereof will be described with reference to FIGS. 3 and 4. FIG. 2 is a flowchart illustrating an example of a flow of a diagnostic method using the diagnostic device 10.

The diagnostic device 10 acquires detection values of the sensors 30 mounted in the neighboring vehicles 1-2 and 1-3 from the detection information acquired through vehicle-to-vehicle communication (Step S11). Then, the diagnostic device 10 estimates a proper value of a detection value (hereinafter also called a "proper value") of the sensor 30 mounted in the host vehicle 1-1 from the detection values of the sensors 30 mounted in the neighboring vehicles 1-2 and 1-3 (Step S12). Here, the proper value of the detection value of the sensor 30 mounted in the host vehicle 1-1 (the neighboring vehicles 1-2 and 1-3) is a value indicating a reference of the detection value when there is no abnormality in the sensor 30 of the host vehicle 1-1 (the neighboring vehicles 1-2 and 1-3). A specific example of the estimation will be described later. Then, the diagnostic device 10 compares the detection value of the sensor 30 mounted in the host vehicle 1-1 with the estimated proper value (Step S13), determines that there is a sign of abnormality of the sensor 30 mounted in the host vehicle 1-1 (Step S14) when the two values are divergent from each other (YES in Step S13), and determines that there is no sign of abnormality of the sensor 30 mounted in the host vehicle 1-1 (Step S15) when the two values are not divergent from each other (NO in Step S13).

FIG. 3 is a diagram illustrating an example of a configuration of the diagnostic device 10. The diagnostic device 10 illustrated in FIG. 3 includes a detection value acquiring unit 110, a proper value estimating unit 120, a diagnosis unit 130, and a storage unit 140.

The detection value acquiring unit 110 performs the process of Step S11. That is, the detection value acquiring unit 110 commands the vehicle-to-vehicle communication unit 40 to receive detection information of the neighboring vehicles 1-2 and 1-3 by vehicle-to-vehicle communication. Then, the detection value acquiring unit 110 acquires detection values of the sensors 30 mounted in the neighboring vehicles 1-2 and 1-3 from the detection information received by the vehicle-to-vehicle communication unit 40 and outputs the acquired detection values to the storage unit 140.

The proper value estimating unit 120 performs the process of Step S12. That is, the proper value estimating unit 120 estimates a proper value based on the detection values stored in the storage unit 140 and outputs the estimated proper value to the diagnosis unit 130. For example, the proper value estimating unit 120 may set an average value of a detection value $x_1$ acquired from the neighboring vehicle 1-2 and a detection value $x_2$ acquired from the neighboring vehicle 1-3 as a proper value x^ of the sensor 30 mounted in the host vehicle 1-1.

Alternatively, the proper value estimating unit 120 may perform weighting depending on differences in form, environment, or the like between the host vehicle 1-1 and the neighboring vehicles 1-2 and 1-3 and estimate the proper value x^ using a weighted average expressed by Equation (1). Here, $w_1$ denotes a weight factor of the detection value $x_1$ and $w_2$ denotes a weight factor of the detection value $x_2$. When weighting is performed, it is assumed that information (for example, vehicle model information) required for determining a weighting is included in the detection information and weightings depending on vehicle models are stored in advance in the storage unit 140.

$$\hat{x} = \frac{x_1 w_1 + x_2 w_2}{w_1 + w_2} \qquad (1)$$

The sensor 30 includes a sensor which is not easily affected by a factor other than the external environment such as an outside air temperature sensor and a sensor of which a detection value differs depending on a vehicle model even under the same external environment such as a sensor for detecting an air pressure of a tire or a sensor for detecting a rotation speed of an engine. When a detection value of a sensor varies depending on a vehicle model, it is preferable that the detection value be corrected by performing weighting depending on the vehicle models. Accordingly, the proper value estimating unit 120 estimates the proper value x^ of the sensor 30 which is mounted in the host vehicle 1-1 by substituting the detection values $x_1$ and $x_2$ into a first arithmetic operation equation not using a weighting or a second arithmetic operation equation using a weighting as expressed in equation (1) depending on the type of the sensor 30 associated with the detection information (depending on whether the sensor 30 is a sensor affected by a factor other than the external environment).

When the range in which vehicle-to-vehicle communication is performed is broadened, the neighboring vehicles may include vehicles having different external environments (driving conditions) such as whether a vehicle is traveling on a flat road, traveling on an uphill road, or traveling on a downhill road. There is a high likelihood that traveling environments of vehicles will become closer to each other as the distance between the vehicles decreases, and traveling environments of vehicles will become more different from each other as the distance between the vehicles increases. Therefore, the proper value estimating unit 120 may estimate the proper value x^ by performing weighting depending on distances between the host vehicle 1-1 and the neighboring vehicles 1-2 and 1-3. For example, the distance between vehicles may be calculated based on position information from a global positioning system (GPS) by including the position information in the detection information, or may be calculated based on a radio wave intensity in vehicle-to-vehicle communication.

It can be assumed that a reliability of a detection value will become higher as an elapsed time after repair or inspection (vehicle inspection) based on the Motor-vehicle Inspection System (Japan) becomes less and the reliability of a detection value will become lower as an elapsed time after repair or inspection has been completed becomes greater. Therefore, the proper value estimating unit 120 may estimate the proper value x^ by performing weighting depending on the elapsed time after repair or inspection of the neighboring vehicles 1-2 and 1-3 has been completed. The elapsed time after repair or inspection may be acquired based on history information of repair or inspection, for example, by including the history information in the detection information.

When a vehicle travels to follow another vehicle while maintaining an appropriate inter-vehicle distance within a preset speed by control such as radar cruise control, it is thought that there is a high likelihood that running environments of the vehicles performing following travel are similar to each other. Therefore, the proper value estimating unit 120 may set a weight factor of a detection value acquired from a neighboring vehicle performing following travel with the host vehicle 1-1 to be greater than a weight factor of a detection value acquired from a neighboring vehicle not performing following travel with the host vehicle 1-1 and may estimate a proper value x^.

The diagnosis unit 130 performs the processes of Steps S13 to S15. That is, the diagnosis unit 130 compares the detection value with the proper value x^ input from the proper value estimating unit 120 for each sensor 30, determines that there is a sign of abnormality in the sensor 30 when the difference therebetween is greater than a preset threshold value (when the detection value of the sensor 30 is divergent from the proper value x^), and determines that there is no sign of abnormality in the sensor 30 when the difference therebetween is equal to or less than the threshold value (when the detection value of the sensor 30 is not divergent from the proper value x^). The diagnosis unit 130 outputs the diagnosis result to a display unit 50, a speaker, an external server, or the like. When it is determined that there is a sign of abnormality in the sensor 30 of the host vehicle 1-1, the diagnosis unit 130 may not transmit the detection information of the sensor 30 to the neighboring vehicles 1-2 and 1-3.

FIG. 4 is a diagram illustrating an example in which a detection value is diagnosed by the diagnostic device 10. Here, it is assumed that a detection value of the outside air temperature sensor 30 is diagnosed, the detection value of the outside air temperature sensor 30 of the host vehicle 1-1 is "15°C," the detection value of the outside air temperature sensor 30 of the neighboring vehicle 1-2 is "22°C," and the detection value of the outside air temperature sensor 30 of the neighboring vehicle 1-3 is "26°C."

The detection value acquiring unit 110 of the host vehicle 1-1 acquires the detection value "22°C" of the outside air temperature sensor 30 of the neighboring vehicle 1-2 by vehicle-to-vehicle communication with the neighboring vehicle 1-2 and acquires the detection value "26°C" of the outside air temperature sensor 30 of the neighboring vehicle 1-3 by vehicle-to-vehicle communication with the neighboring vehicle 1-3.

Since the outside air temperature sensor 30 is a sensor which is not easily affected by differences between the vehicles, the proper value estimating unit 120 of the host vehicle 1-1 determines that the proper value of the outside air temperature sensor 30 is "24°C" which is an average value of "22°C" and "26°C." The diagnosis unit 130 of the host vehicle 1-1 compares the detection value "15°C" of the outside air temperature sensor 30 of the host vehicle 1-1 with the proper value "24°C" of the outside air temperature sensor 30 and determines there is a sign of abnormality in the outside air temperature sensor 30, for example, when the threshold value is "5°C" because a difference therebetween is "9°C."

In this way, in the diagnostic device 10 and the diagnostic method thereof according to the first embodiment, the detection values of the sensors 30 mounted in the neighboring vehicles 1-2 and 1-3 are acquired and the proper value of the detection value of the sensor 30 mounted in the host vehicle 1-1 which is located within a predetermined range from the neighboring vehicles 1-2 and 1-3 is estimated using the acquired detection values. In other words, the detection values of the sensors 30 mounted in the neighboring vehicles 1-2 and 1-3 which are located within a predetermined range from the host vehicle 1-1 are acquired and the proper value of the detection value of the sensor 30 mounted in the host vehicle 1-1 is estimated using the acquired detection values. Then, the operating state of the sensor 30 mounted in the host vehicle 1-1 is diagnosed by comparing the detection value and the proper value of the sensor 30 mounted in the host vehicle 1-1. When the proper value of the detection value of the sensor 30 mounted in the host vehicle 1-1 is estimated, a first operation not using a weighting or a second operation using a weighting is performed depending on the type of the sensor 30. Accordingly, according to the first embodiment of the invention, even when the sensor 30 is a sensor which is easily affected by a factor other than the external environment, it is possible to correctly estimate the proper value and to accurately detect a sign of abnormality in the sensor 30 mounted in the host vehicle 1-1.

For example, by weighting the detection values of the sensors 30 mounted in the neighboring vehicles 1-2 and 1-3 depending on the vehicle models of the neighboring vehicles 1-2 and 1-3, elapsed times after repair or inspection of the neighboring vehicles 1-2 and 1-3 has been completed, or distances between the host vehicle 1-1 and the neighboring vehicles 1-2 and 1-3 and estimating the proper value of the sensor 30 mounted in the host vehicle 1-1, it is possible to accurately detect a sign of abnormality.

By calculating an average value of the detection values using the first operation and calculating a weighted average value of the detection values using the second operation, it is possible to accurately estimate the proper value through a simple arithmetic operation with a small calculation load.

(Second embodiment)

A diagnostic device 11 according to a second embodiment will be described below. In the diagnostic device 10 according to the first embodiment, a sign of abnormality can be accurately detected when detection values can be acquired from many neighboring vehicles by vehicle-to-vehicle communication, but there is a likelihood that accuracy in detecting a sign of abnormality will be lowered when the number of neighboring vehicles is small. Here, it is conceivable that detection information of vehicles within communication ranges of neighboring vehicles and outside the communication range of the host vehicle is received via the neighboring vehicles using an Ad-hoc network or a transmission function of vehicle-to-vehicle communication. However, since a communication traffic volume in this method is large, a band which is used for communication is tightened.

Therefore, the second embodiment is invented to accurately detect a sign of abnormality even when the number of neighboring vehicles is small without increasing a communication traffic volume. In this embodiment, similarly to the first embodiment, the vehicle 1-1 is defined as a host vehicle and the vehicle 1-2 and the vehicle 1-3 are defined as neighboring vehicles.

The vehicle-to-vehicle communication unit 40 transmits and receives detection information by vehicle-to-vehicle communication. Detection information in the first embodiment is information including a detection value of a sensor 30, and detection information in the second embodiment is information including a detection value and a proper value of a sensor 30.

The diagnostic device 11 determines whether there is a sign of abnormality in the sensor 30 mounted in the host vehicle 1-1 based on the detection information received through vehicle-to-vehicle communication by the vehicle-to-vehicle communication unit 40

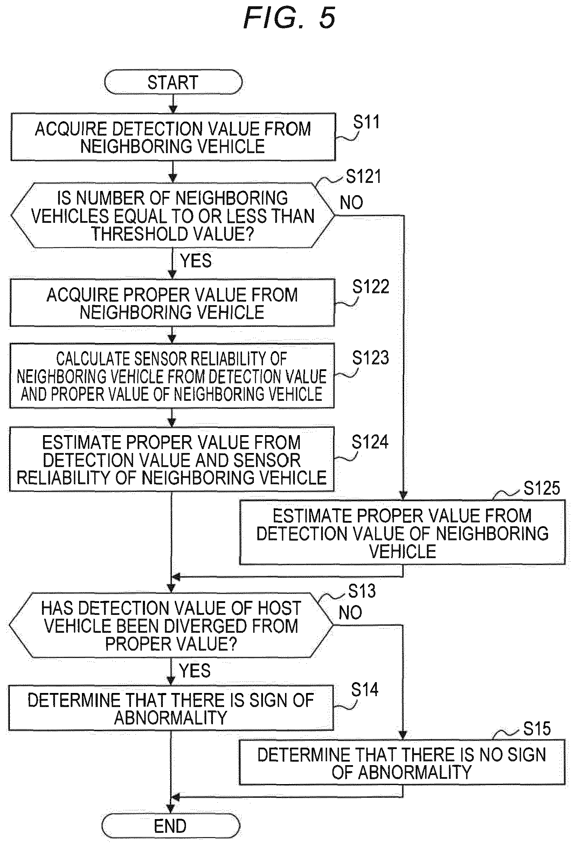

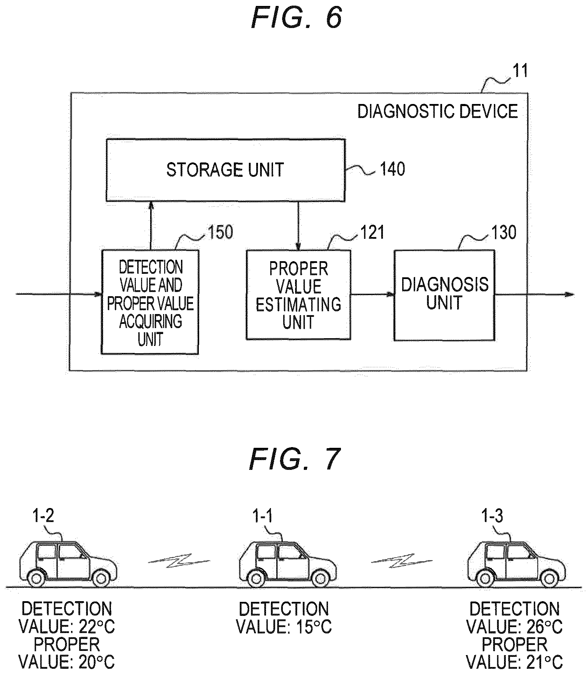

An outline of process details which are performed by the diagnostic device 11 will be first described with reference to FIG. 5 and then details thereof will be described with reference to FIGS. 6 and 7. FIG. 5 is a flowchart illustrating an example of a flow of a diagnostic method using the diagnostic device 11.

The diagnostic device 11 acquires detection values of the sensors 30 mounted in the neighboring vehicles 1-2 and 1-3 from the detection information acquired through vehicle-to-vehicle communication (Step S11). Then, the diagnostic device 11 determines whether the number of neighboring vehicles 1-2 and 1-3 is equal to or less than a threshold value (Step S121). When the number of neighboring vehicles 1-2 and 1-3 is greater than the threshold value (NO in Step S121), the diagnostic device 11 estimates proper value of the detection value of the sensor 30 mounted in the host vehicle 1-1 based on the detection values of the sensors 30 mounted in the neighboring vehicles 1-2 and 1-3 (Step S125) through the same processes as in the first embodiment.

When the number of neighboring vehicles 1-2 and 1-3 is equal to or less than the threshold value (YES in Step S121), the diagnostic device 11 acquires the proper values of the sensors 30 mounted in the neighboring vehicles 1-2 and 1-3 (Step S122). Then, the diagnostic device 11 calculates reliabilities of the sensors 30 (hereinafter referred to as "sensor reliabilities") mounted in the neighboring vehicles 1-2 and 1-3 based on the detection values and the proper values of the sensors 30 mounted in the neighboring vehicles 1-2 and 1-3 (Step S123). Then, the diagnostic device 11 estimates the proper value of the sensor 30 mounted in the host vehicle 1-1 from the detection values and the sensor reliabilities of the neighboring vehicles 1-2 and 1-3 (Step S124).

Then, the diagnostic device 11 compares the detection value of the sensor 30 mounted in the host vehicle 1-1 with the estimated proper value (Step S13), determines that there is a sign of abnormality in the sensor 30 mounted in the host vehicle 1-1 (Step S14) when the two values are divergent from each other (YES in Step S13), and determines that there is no sign of abnormality in the sensor 30 mounted in the host vehicle 1-1 (Step S15) when the two values are not divergent from each other (NO in Step S13).

The diagnostic device 11 does not perform the process of Step S123 but may estimate a proper value of the sensor 30 mounted in the host vehicle 1-1 based on the detection values and the proper values of the sensors 30 mounted in the neighboring vehicles 1-2 and 1-3 in Step S124.

The diagnostic device 11 does not perform the processes of Steps S121 and S125, but may acquire the proper values of the sensors 30 mounted in the neighboring vehicles 1-2 and 1-3 (Step S122) whenever the detection values of the sensors 30 mounted in the neighboring vehicles 1-2 and 1-3 are acquired (Step S11), calculate the sensor reliabilities of the neighboring vehicles 1-2 and 1-3 based on the detection values and the proper values of the neighboring vehicles 1-2 and 1-3 (Step S123), and estimate the proper value of the sensor 30 mounted in the host vehicle 1-1 from the detection values of the sensors 30 mounted in the neighboring vehicles 1-2 and 1-3 and the sensor reliabilities thereof (Step S124).

FIG. 6 is a diagram schematically illustrating a configuration of the diagnostic device 11. The diagnostic device 11 illustrated in FIG. 6 includes a detection value and proper value acquiring unit 150, a proper value estimating unit 121, a diagnosis unit 130, and a storage unit 140.

The detection value and proper value acquiring unit 150 performs the processes of Steps S11, S121, and S122. That is, the detection value and proper value acquiring unit 150 receives detection information received through vehicle-to-vehicle communication by the vehicle-to-vehicle communication unit 40, acquires detection values of the sensors 30 mounted in the neighboring vehicles 1-2 and 1-3 from the detection information, and also acquires the proper values of the sensors 30 mounted in the neighboring vehicles 1-2 and 1-3 when the number of neighboring vehicles 1-2 and 1-3 is less than the threshold value. Then, the detection value and proper value acquiring unit 150 outputs the acquired detection values and the acquired proper values to the storage unit 140.

The proper value estimating unit 121 performs the processes of Steps S123 to S125. In this embodiment, since the number of neighboring vehicles 1-2 and 1-3 is two, the proper value estimating unit 121 estimates the proper value through Steps S123 and S124, for example, when the threshold value in Step S121 is five.

In Step S123, the proper value estimating unit 121 calculates the sensor reliabilities of the neighboring vehicles 1-2 and 1-3 by comparing the proper values with the detection values of the sensors 30 mounted in the neighboring vehicles 1-2 and 1-3 which are stored in the storage unit 140. That is, the proper value estimating unit 121 calculates the sensor reliability $s_1$ of the neighboring vehicle 1-2 based on the comparison result between the detection value $x_1$ acquired from the neighboring vehicle 1-2 and the proper value $y_1$ and calculates the sensor reliability $s_2$ of the neighboring vehicle 1-3 based on the comparison result between the detection value $x_2$ acquired from the neighboring vehicle 1-3 and the proper value $y_2$. The sensor reliability is set to increase as an index value of the difference between the detection value and the proper value of the sensor 30 mounted in each of the neighboring vehicles 1-2 and 1-3 decreases. Here, the index value of the difference refers to the absolute value of the difference between the detection value and the proper value, a ratio of the absolute value of the difference between the detection value and the proper value to the detection value, or the like. Then, the proper value estimating unit 121 calculates a weight factor (a weight factor having a positive relationship with the sensor reliability $s_1$) $w_{s1}$ based on the sensor reliability s1 and a weight factor $w_{s2}$ based on the sensor reliability $s_2$, and estimates the proper value $x^\wedge$ of the sensor 30 mounted in the host vehicle 1-1 using a weighted average expressed by Equation (2).

$$\hat{x} = \frac{x_1 w_{s1} + x_2 w_{s2}}{w_{s1} + w_{s2}} \qquad (2)$$

Similarly to the first embodiment, the proper value estimating unit 121 may weight the detection value $x_1$ and the detection value $x_2$ using the weight factors $w_1$ and $w_2$ and estimate the proper value $x^\wedge$ using a weighted average expressed by Equation (3).

$$\hat{x} = \frac{x_1 w_1 w_{s1} + x_2 w_2 w_{s2}}{w_1 w_{s1} + w_2 w_{s2}} \qquad (3)$$

The detection value and proper value acquiring unit 150 may acquire position information at the time of detecting the detection value of the sensors 30 mounted in the neighboring vehicles 1-2 and 1-3 and at the time of calculating the proper values from the neighboring vehicles 1-2 and 1-3, and the proper value estimating unit 121 may estimate the proper value $x^\wedge$ based on the detection values and the proper values of the sensors 30 mounted in the neighboring vehicles 1-2 and 1-3 and the position information. For example, when traveling directions of the neighboring vehicles 1-2 and 1-3 are different from that of the host vehicle 1-1, it is possible to improve the accuracy of the proper value $x^\wedge$ by decreasing the weight factors applied to the detection values or not using the detection values for the arithmetic operations.

When the number of neighboring vehicles 1-2 and 1-3 is greater than the threshold value, the proper value estimating unit 121 estimates the proper value through the same process as in the proper value estimating unit 120 of the diagnostic device 10 according to the first embodiment.

The diagnosis unit 130 performs the processes of Steps S13 to S15. That is, the diagnosis unit 130 compares the detection value with the proper value $x^\wedge$ input from the proper value estimating unit 121 for each sensor 30, determines that there is a sign of abnormality in the sensor 30 when the difference therebetween is greater than a preset threshold value (when the detection value of the sensor 30 is divergent from the proper value $x^\wedge$), and determines that there is no sign of abnormality in the sensor 30 when the difference therebetween is equal to or less than the threshold value (when the detection value of the sensor 30 is not divergent from the proper value $x^\wedge$). The diagnosis unit 130 outputs the diagnosis result to an onboard display unit 50, a speaker, an external server, or the like.

FIG. 7 is a diagram illustrating a specific example in which a detection value is diagnosed by the diagnostic device 11. Here, it is assumed that a detection value of the outside air temperature sensor 30 is diagnosed, the detection value of the outside air temperature sensor 30 of the host vehicle 1-1 is "15°C," the detection value of the outside air temperature sensor 30 of the neighboring vehicle 1-2 is "22°C," the proper value thereof is "20°C," the detection value of the outside air temperature sensor 30 of the neighboring vehicle 1-3 is "26°C," and the proper value thereof is "21°C." It is also assumed that the number of neighboring vehicles "two" is equal to or less than the threshold value.

The detection value and proper value acquiring unit 150 of the host vehicle 1-1 acquires the detection value "22°C" and the proper value "20°C" of the outside air temperature sensor 30 of the neighboring vehicle 1-2 by vehicle-to-vehicle communication with the neighboring vehicle 1-2 and acquires the detection value "26°C" and the proper value "21°C" of the outside air temperature sensor 30 of the neighboring vehicle 1-3 by vehicle-to-vehicle communication with the neighboring vehicle 1-3.

The proper value estimating unit 121 calculates sensor reliabilities which increase as an index value decrease based on the index value of the difference between the detection values and the proper values of the sensors 30 mounted in the neighboring vehicles 1-2 and 1-3. For example, the sensor reliability is set to a value obtained by dividing the detection value by the absolute value of the difference between the detection value and the proper value. In this case, the sensor reliability $s_1$ of the neighboring vehicle 1-2 is 22/|22-20| = 11 and the sensor reliability $s_2$ of the neighboring vehicle 1-3 is 26/|26-21| = 5.2.

Then, the proper value estimating unit 121 determines weight factors based on the sensor reliabilities $s_1$ and $s_2$. For example, by normalizing the sensor reliabilities $s_1$ and $s_2$, the weight factor $w_{s1}$ based on the sensor reliability $s_1$ is set to 0.68 and the weight factor $w_{s2}$ based on the sensor reliability $s_2$ is set to 0.32. When the difference between the detection value and the proper value is greater than the threshold value, the reliability of the detection value is low and thus the weight factor of the sensor reliability may be set to zero so as not to use the detection value for an operation of estimating the proper value.

Since the outside air temperature sensor 30 is a sensor which is not easily affected by the differences between vehicles, the proper value estimating unit 121 of the host vehicle 1-1 determines that the proper value of the outside air temperature sensor 30 is 22 × 0.68 + 26 × 0.32 = 23.28 [°C], for example, using Equation (2). The diagnosis unit 130 of the host vehicle 1-1 compares the proper value "23.28°C" of the outside air temperature sensor 30 with the detection value "15°C" of the outside air temperature sensor 30 of the host vehicle 1-1 and determines that there is a sign of abnormality in the outside air temperature sensor 30, for example, when the threshold value is "5°C" because the difference therebetween is "8.28°C."

In this way, in the diagnostic device 11 according to the second embodiment and the diagnostic method thereof, the detection values of the sensors 30 mounted in the neighboring vehicles 1-2 and 1-3 are acquired, and the proper value of the sensor 30 mounted in the host vehicle 1-1 which is located within a predetermined range from the neighboring vehicles 1-2 and 1-3 is estimated based on the detection values and the proper values of the sensors 30 mounted in the neighboring vehicles 1-2 and 1-3. Accordingly, according to the second embodiment of the invention, it is possible to accurately detect a sign of abnormality in the sensor 30 mounted in the host vehicle 1-1 even when the number of neighboring vehicles 1-2 and 1-3 is small without increasing a communication traffic volume.

By calculating the reliabilities of the sensors 30 mounted in the neighboring vehicles 1-2 and 1-3 based on the detection values and the proper values of the sensors 30, it is possible to perform diagnosis in consideration of an influence of a detection value of a sensor 30 having a high likelihood there is certain abnormality and to curb a decrease in detection accuracy.

By estimating the proper value of the sensor 30 mounted in the host vehicle 1-1 in consideration of the position information at the time of calculating the detection values and the proper values of the sensors 30 mounted in the neighboring vehicles 1-2 and 1-3, it is possible to perform diagnosis in a state in which detection information of a neighboring vehicle of which the traveling direction is different from the traveling direction of the host vehicle 1-1 and which is not suitable for the diagnosis is excluded.

(Third embodiment)

A diagnostic device according to a third embodiment will be described below. In the first and second embodiments, the diagnostic device 10 or the diagnostic device 11 (hereinafter referred to as a "diagnostic device 10(11)") is mounted in the vehicle 1, but a diagnostic device 10(11) according to the third embodiment is provided outside the vehicle 1.

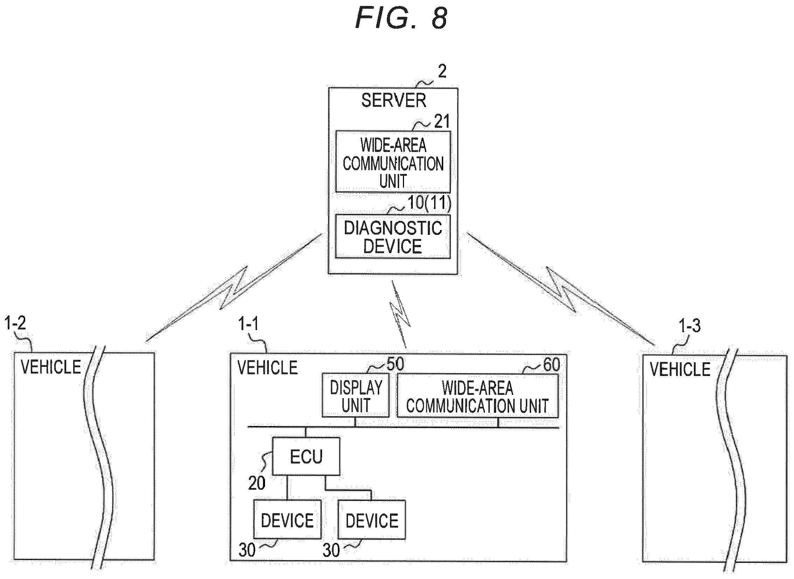

FIG. 8 is a diagram schematically illustrating a configuration of a system including the diagnostic device according to the third embodiment. Each vehicle 1 includes an ECU 20, a device (a sensor in this embodiment) 30, a display unit 50, and a wide-area communication unit 60. The server 2 includes a wide-area communication unit 21 and a diagnostic device 10(11). The server 2 may be a cloud server or a data center.

The wide-area communication unit 60 modulates detection information of the sensor 30 mounted in the vehicle 1 using radio waves of a pre-assigned frequency band, and transmits the modulated detection information to the server 2 via a wide-area network.

The wide-area communication unit 21 receives detection information of the sensor 30 mounted in the vehicles 1 form the vehicles 1 via the wide-area network using radio waves of a pre-assigned frequency band, demodulates the received detection information, and outputs the demodulated detection information to the diagnostic device 10(11).

A diagnostic method according to the third embodiment is the same as the diagnostic method according to the first embodiment or the second embodiment described above with reference to FIG. 2 or 5. In the third embodiment, the host vehicle 1-1 refers to a diagnosis target vehicle and the neighboring vehicles 1-2 and 1-3 refer to vehicles which are located within a predetermined range from the diagnosis target vehicle.

When the diagnostic device 10 diagnoses the sensor 30 mounted in the host vehicle 1-1, the detection value acquiring unit 110 acquire the detection values of the sensors 30 mounted in the diagnosis target vehicle 1-1 and the neighboring vehicles 1-2 and 1-3 thereof from the detection information received by the wide-area communication unit 21, the proper value estimating unit 120 estimates the proper value based on the detection values of the sensors 30 mounted in the neighboring vehicles 1-2 and 1-3, and the diagnosis unit 130 compares the detection value of the sensor 30 mounted in the diagnosis target vehicle 1-1 with the estimated proper value and diagnoses the operating state of the sensor 30. The diagnosis result may be stored in the server 2, or may be output to the wide-area communication unit 21 such that the diagnosis result is transmitted from the wide-area communication unit 21 to the diagnosis target vehicle 1-1.

When the diagnostic device 11 diagnoses the sensor 30 mounted in the host vehicle 1-1, the detection value and proper value acquiring unit 150 acquires the detection values of the sensors 30 mounted in the diagnosis target vehicle 1-1 and the neighboring vehicles 1-2 and 1-3 thereof from the detection information received by the wide-area communication unit 21, the proper value estimating unit 121 estimates the proper value based on the detection values of the sensors 30 mounted in the neighboring vehicles 1-2 and 1-3, and the diagnosis unit 130 compares the detection value of the sensor 30 mounted in the diagnosis target vehicle 1-1 with the estimated proper value and diagnoses the operating state of the sensor 30. The diagnosis result may be stored in the server 2, or may be output to the wide-area communication unit 21 such that the diagnosis result is transmitted from the wide-area communication unit 21 to the diagnosis target vehicle 1-1.

In this way, the diagnostic device 10(11) according to the third embodiment is disposed in the server 2 outside the vehicle. Accordingly, according to the third embodiment of the invention, it is possible to reduce a communication traffic volume and a calculation load in the vehicle 1. It is possible to comprehensively manage a large amount of data of the vehicle 1 in the server 2.

(Fourth embodiment)

A diagnostic system according to a fourth embodiment will be described below. In the diagnostic system according to the fourth embodiment, the diagnostic device 10(11) is disposed in each vehicle 1 and the server 2 to enable both the vehicle 1 and the server 2 to diagnose the sensor 30.

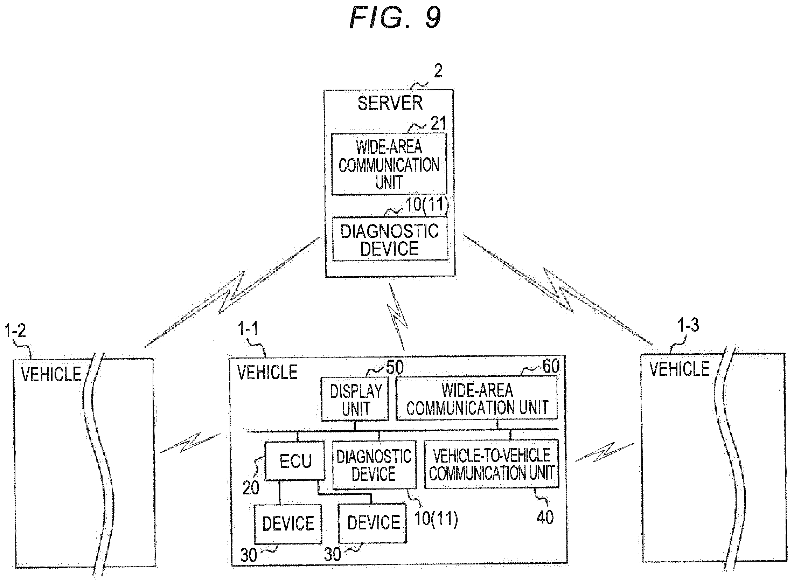

FIG. 9 is a diagram schematically illustrating a configuration of a diagnostic system according to the fourth embodiment. Each vehicle 1 includes a diagnostic device 10(11), an ECU 20, a device (a sensor in this embodiment) 30, a vehicle-to-vehicle communication unit 40, a display unit 50, and a wide-area communication unit 60. The server 2 includes a wide-area communication unit 21 and a diagnostic device 10(11).

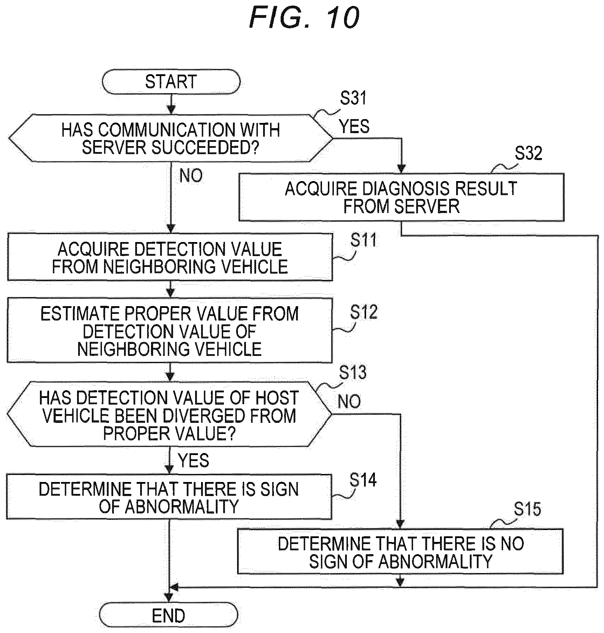

Processing details of the diagnostic device 10 mounted in the vehicle 1 will be described below with reference to FIG. 10. FIG. 10 is a flowchart illustrating a first example of a flow of a diagnostic method using the diagnostic system according to the fourth embodiment.

When the wide-area communication unit 60 succeeds to communicate with the server 2 (YES in Step S31), the diagnostic device 10 of the vehicle 1 acquires a diagnostic result of the diagnostic device 10 disposed in the server 2 from the server 2 (Step S32).

On the other hand, when the wide-area communication unit 60 fails to communicate with the server 2 due to electromagnetic interference, malfunction of the server 2, or the like (NO in Step S31), the diagnostic device 10 performs vehicle-to-vehicle communication with the neighboring vehicles 1-2 and 1-3 and acquires the detection values of the sensors 30 mounted in the neighboring vehicles 1-2 and 1-3 from the detection information acquired through the vehicle-to-vehicle communication (Step S11).

The flow after the detection values have been acquired is the same as in the first embodiment. That is, the diagnostic device 10 estimates the proper value (Step S12), compares the detection value of the sensor 30 mounted in the host vehicle 1-1 with the estimated proper value (Step S13), determines that there is a sign of abnormality in the sensor 30 mounted in the host vehicle 1-1 (Step S14) when the two values are divergent from each other (YES in Step S13), and determines that there is no sign of abnormality in the sensor 30 mounted in the host vehicle 1-1 (Step S15) when the two values are not divergent from each other (NO in Step S13).

The detection value acquiring unit 110 of the diagnostic device 10 of the vehicle 1 performs the processes of Steps S31, S32, and S11. That is, the detection value acquiring unit 110 commands the wide-area communication unit 60 to receive the diagnosis result by communication with the server 2. When the wide-area communication unit 60 succeeds to communicate therewith, the detection value acquiring unit 110 acquires the diagnosis result. When the wide-area communication unit 60 fails to communicate therewith, the detection value acquiring unit 110 commands the vehicle-to-vehicle communication unit 40 to receive detection information of the neighboring vehicles 1-2 and 1-3 by vehicle-to-vehicle communication. Then, the detection value acquiring unit 110 acquires the detection values of the sensors 30 mounted in the neighboring vehicles 1-2 and 1-3 from the detection information received by the vehicle-to-vehicle communication unit 40 and outputs the acquired detection values to the storage unit 140.

The proper value estimating unit 120 of the diagnostic device 10 of the vehicle 1 performs the process of Step S12 similarly to the first embodiment. That is, the proper value estimating unit 120 estimates the proper value based on the detection value stored in the storage unit 140 and outputs the estimated proper value to the diagnosis unit 130.

The diagnosis unit 130 of the diagnostic device 10 of the vehicle 1 performs the processes of Steps S13 to S15 similarly to the first embodiment. That is, the diagnosis unit 130 compares the detection value with the proper value input from the proper value estimating unit 120 for each sensor 30, determines that there is a sign of abnormality in the sensor 30 when the difference therebetween is greater than a preset threshold value, and determines that there is no sign of abnormality in the sensor 30 when the difference therebetween is equal to or less than the threshold value. The diagnosis unit 130 outputs the diagnosis result to the onboard display unit 50, a speaker, or the like or may output the diagnosis result to the server 2.

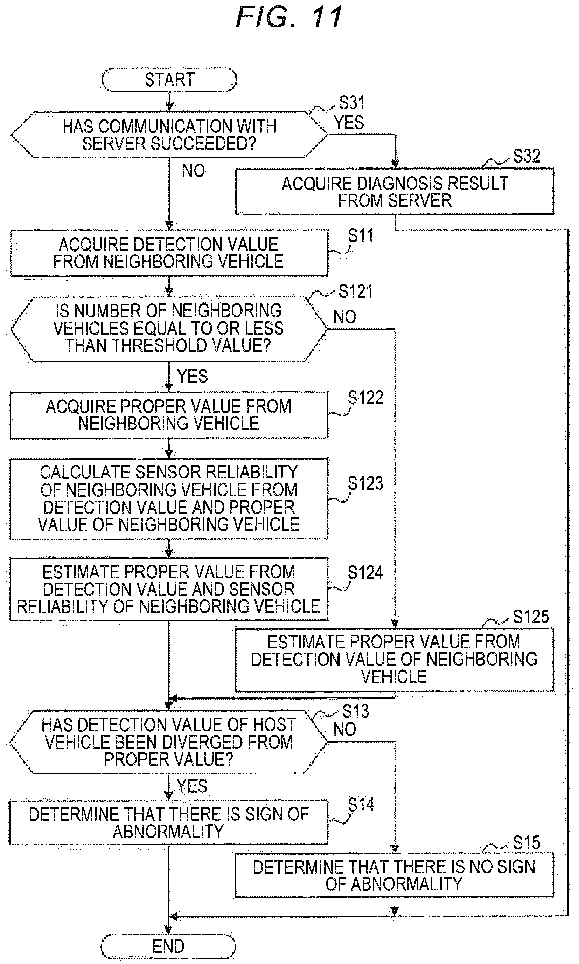

Processing details of the diagnostic device 11 mounted in the vehicle 1 will be described below with reference to FIG. 11. FIG. 11 is a flowchart illustrating a second example of a flow of a diagnostic method using the diagnostic system according to the fourth embodiment. The processes other than Steps S121 to S125 are the same as the processes illustrated in FIG. 10.

The detection value and proper value acquiring unit 150 of the diagnostic device 11 of the vehicle 1 performs the processes of Steps S31, S32, and S11. That is, the detection value and proper value acquiring unit 150 commands the wide-area communication unit 60 to receive the diagnosis result by communication with the server 2. When the wide-area communication unit 60 succeeds to communicate therewith (YES in Step S31), the detection value and proper value acquiring unit 150 acquires the diagnosis result of the diagnostic device 11 disposed in the server 2 (Step S32). When the wide-area communication unit 60 fails to communicate therewith (NO in Step S31), the detection value and proper value acquiring unit 150 commands the vehicle-to-vehicle communication unit 40 to receive detection information of the neighboring vehicles 1-2 and 1-3 by vehicle-to-vehicle communication. Then, the detection value and proper value acquiring unit 150 acquires the detection values of the sensors 30 mounted in the neighboring vehicles 1-2 and 1-3 from the detection information received by the vehicle-to-vehicle communication unit 40 (Step S11) and outputs the acquired detection values to the storage unit 140.

The proper value estimating unit 121 of the diagnostic device 11 of the vehicle 1 performs the processes of Steps S121 to S125 similarly to the second embodiment. That is, when the number of neighboring vehicles 1-2 and 1-3 is equal to or less than the threshold value (YES in Step S121), the proper value estimating unit 121 calculates sensor reliabilities of the neighboring vehicles 1-2 and 1-3 based on the detection values and the proper values of the sensors 30 mounted in the neighboring vehicles 1-2 and 1-3 which are stored in the storage unit 140 (Step S123), calculates weight factors corresponding to the sensor reliabilities, and estimates the proper value by a weighted average thereof (Step S124). When the number of neighboring vehicles 1-2 and 1-3 is greater than the threshold value (NO in Step S121), the proper value estimating unit 121 estimates the proper value of the detection value of the sensor 30 mounted in the host vehicle 1-1 based on the detection values of the sensors 30 mounted in the neighboring vehicles 1-2 and 1-3 (Step S125).

The diagnosis unit 130 of the diagnostic device 11 of the vehicle 1 performs the processes of Steps S13 to S15 similarly to the second embodiment. That is, the diagnosis unit 130 compares the detection values with the proper value input from the proper value estimating unit 121 for each sensor 30, determines that there is a sign of abnormality in the sensor 30 when the difference therebetween is greater than a preset threshold value, and determines that there is no sign of abnormality in the sensor 30 when the difference therebetween is equal to or less than the threshold value. The diagnosis unit 130 may output the diagnosis result to the onboard display unit 50, a speaker, or the like or may output the diagnosis result to the server 2.

In this way, in the diagnostic system according to the fourth embodiment, the diagnostic device 10(11) of a vehicle 1 acquires the detection values of the sensors 30 mounted in the neighboring vehicles 1-2 and 1-3 by vehicle-to-vehicle communication only when the vehicle 1 fails to communicate with the server 2. Accordingly, according to the fourth embodiment of the invention, it is possible to reduce a communication traffic volume and a calculation load in the vehicle 1 by vehicle-to-vehicle communication and to comprehensively manage a large amount of data of the vehicles 1 in the server 2. Even when the vehicle 1 fails to communicate with the server 2, it is possible to acquire the detection values of the sensors 30 mounted in the neighboring vehicles 1-2 and 1-3 and to diagnose the sensor 30 mounted in the host vehicle 1-1.

A computer may be used to serve as the diagnostic device 10(11) according to the embodiments of the invention. Regarding such a computer, processing details for implementing the functions of the diagnostic device 10(11) can be embodied by storing a program in which the processing details are described in a storage unit of the computer and causing a CPU of the computer to read and execute the program.

This program may be stored in a computer-readable medium. When a computer-readable medium is used, the program can be installed in the computer. Here, the computer-readable medium having the program stored therein may be a non-transitory recording medium. The non-transitory recording medium is not particularly limited and may be a recording medium such as a CD-ROM or a DVD-ROM.

While the above-mentioned embodiments have described as representative examples, it will be apparent to those skilled in the art that the embodiments can be modified and substituted in various forms within the gist and the scope of the invention. Therefore, the invention should not be understood to be limited by the embodiments, and can be modified or changed in various forms without departing from the scope of the appended claims. For example, a plurality of constituent blocks or steps described in the embodiments may be combined into one block or step or one constituent block or step may be divided.

**Claims**

1. A diagnostic device (10, 11) comprising:

   a detection value acquiring unit (110, 150) configured to acquire a detection value of a first device (30) mounted in a first vehicle (1-2, 1-3) which is located within a predetermined range from a second vehicle (1-1);
   a proper value estimating unit (120, 121) configured to estimate, by using the detection value of the first device (30), a proper value of a detection value of a second device (30) mounted in the second vehicle (1-1), the proper value estimating unit (120, 121) estimating the proper value by performing a first operation not using a weighting or a second operation using the weighting depending on a type of the first device (30); and
   a diagnosis unit (130) configured to diagnose an operating state of the second device (30) by comparing the detection value of the second device (30) with the proper value.

2. The diagnostic device (10, 11) according to claim 1, wherein the proper value estimating unit (120, 121) is configured to weight the detection value of the first device (30) based on a vehicle model of the first vehicle (1-2, 1-3) when the second operation is performed.

3. The diagnostic device (10, 11) according to claim 1 or 2, wherein the proper value estimating unit (120, 121) is configured to weight the detection value of the first device (30) based on an elapsed time after repair or inspection of the first vehicle (1-2, 1-3) has been completed when the second operation is performed.

4. The diagnostic device (10, 11) according to any one of claims 1 to 3, wherein the proper value estimating unit (120, 121) is configured to weight the detection value of the first device (30) based on a distance between the first vehicle (1-2, 1-3) and the second vehicle (1-1) when the second operation is performed.

5. The diagnostic device (10, 11) according to any one of claims 1 to 4, wherein the detection value acquiring unit (110, 150) is configured to acquire the detection value of the first device (30) of each of a plurality of the first vehicles (1-2, 1-3),
   wherein the first operation is calculation of an average value of the detection values of the first devices (30), and
   wherein the second operation is calculation of a weighted average value of the detection values of the first devices (30).

6. The diagnostic device (10, 11) according to claim 1, wherein the detection value acquiring unit (110, 150) is configured to acquire first information which is information contributing to determination of a weight factor, and
   wherein the proper value estimating unit (120, 121) is configured to use the weight factor corresponding to the first information to perform the second operation.

7. The diagnostic device (10, 11) according to claim 6, wherein the first information includes at least one of a vehicle model of the first vehicle (1-2, 1-3), an elapsed time after repair or inspection of the first vehicle (1-2, 1-3) has been completed, and a distance between the first vehicle (1-2, 1-3) and the second vehicle (1-1).

8. The diagnostic device (10, 11) according to claim 1, wherein the detection value acquiring unit (150) is configured to acquire a proper value of the detection value of the first device (30), and
   wherein the proper value estimating unit (121) is configured to estimate the proper value of the detection value of the second device (30) using the proper value of the detection value of the first device (30).

9. The diagnostic device (10, 11) according to claim 1, wherein the diagnosis unit (130) is configured to output the operating state of the second device (30) to an external device.

10. A diagnostic system comprising:

   the diagnostic device (10, 11) according to any one of claims 1 to 9; and
   a server (2) configured to communicate with a vehicle (1-1) in which the diagnostic device (10, 11) is mounted,

wherein the detection value acquiring unit (110, 150) is configured to acquire the detection value of the first device (30) by vehicle-to-vehicle communication only when the vehicle (1-1) has failed to communicate with the server (2).

**11.** A diagnostic method comprising:

causing a diagnostic device (10, 11) to acquire a detection value of a first device (30) mounted in a first vehicle (1-2, 1-3) which is located within a predetermined range from a second vehicle (1-1);

causing the diagnostic device (10, 11) to estimate, by using the detection value of the first device (30), a proper value of a detection value of a second device (30) mounted in the second vehicle (1-1), the proper value being estimated by performing a first operation not using a weighting or a second operation using the weighting depending on a type of the first device (30); and

causing the diagnostic device (10, 11) to diagnose an operating state of the second device (30) by comparing the detection value of the second device (30) with the proper value.

# FIG. 1

## FIG. 2

```
        ┌──────── START ────────┐

  ┌─────────────────────────────────┐
  │ ACQUIRE DETECTION VALUE FROM     │ S11
  │      NEIGHBORING VEHICLE         │
  └─────────────────────────────────┘

  ┌─────────────────────────────────┐
  │   ESTIMATE PROPER VALUE FROM     │ S12
  │       DETECTION VALUE OF         │
  │      NEIGHBORING VEHICLE         │
  └─────────────────────────────────┘
                                       S13
  ╱─────────────────────────────────╲   NO
 ╱  HAS DETECTION VALUE OF HOST       ╲──────────┐
 ╲  VEHICLE BEEN DIVERGED FROM        ╱          │
  ╲        PROPER VALUE?             ╱           │
   ╲─────────────────────────────────╱           │
               │ YES                             │
  ┌─────────────────────────────────┐  S14       │
  │  DETERMINE THAT THERE IS SIGN    │            │
  │        OF ABNORMALITY            │            │
  └─────────────────────────────────┘            │
               │                                  │  S15
               │         ┌────────────────────────────────────┐
               │         │  DETERMINE THAT THERE IS NO         │
               │         │       SIGN OF ABNORMALITY           │
               │         └────────────────────────────────────┘
               │                       │
               └───────────────────────┘

        ┌──────── END ────────┐
```

# FIG. 3

**DIAGNOSTIC DEVICE** 10

STORAGE UNIT 140

DETECTION VALUE ACQUIRING UNIT 110

PROPER VALUE ESTIMATING UNIT 120

DIAGNOSIS UNIT 130

# FIG. 4

1-2
DETECTION VALUE: 22°C

1-1
DETECTION VALUE: 15°C

1-3
DETECTION VALUE: 26°C

# FIG. 5

START

ACQUIRE DETECTION VALUE FROM NEIGHBORING VEHICLE  S11

IS NUMBER OF NEIGHBORING VEHICLES EQUAL TO OR LESS THAN THRESHOLD VALUE?  S121  NO

YES

ACQUIRE PROPER VALUE FROM NEIGHBORING VEHICLE  S122

CALCULATE SENSOR RELIABILITY OF NEIGHBORING VEHICLE FROM DETECTION VALUE AND PROPER VALUE OF NEIGHBORING VEHICLE  S123

ESTIMATE PROPER VALUE FROM DETECTION VALUE AND SENSOR RELIABILITY OF NEIGHBORING VEHICLE  S124

ESTIMATE PROPER VALUE FROM DETECTION VALUE OF NEIGHBORING VEHICLE  S125

HAS DETECTION VALUE OF HOST VEHICLE BEEN DIVERGED FROM PROPER VALUE?  S13  NO

YES

DETERMINE THAT THERE IS SIGN OF ABNORMALITY  S14

DETERMINE THAT THERE IS NO SIGN OF ABNORMALITY  S15

END

## FIG. 6

```
                                                    ~11
 ┌──────────────────────────────────────────────────────┐
 │                                   DIAGNOSTIC DEVICE    │
 │     ┌────────────────────────────┐   ~140             │
 │     │        STORAGE UNIT         │                    │
 │     └────────────────────────────┘                    │
 │         ↑              ↓                               │
 │       ~150          ~121         ~130                 │
 │  ┌──────────┐   ┌──────────┐  ┌──────────┐            │
 │  │DETECTION │   │ PROPER   │  │          │            │
 │  │VALUE AND │   │ VALUE    │  │DIAGNOSIS │            │
 →──┤PROPER VALUE├──→│ESTIMATING├─→│  UNIT    ├──────────→ │
 │  │ACQUIRING │   │ UNIT     │  │          │            │
 │  │  UNIT    │   │          │  │          │            │
 │  └──────────┘   └──────────┘  └──────────┘            │
 └──────────────────────────────────────────────────────┘
```

## FIG. 7

| 1-2 | 1-1 | 1-3 |
|---|---|---|
| DETECTION VALUE: 22°C PROPER VALUE: 20°C | DETECTION VALUE: 15°C | DETECTION VALUE: 26°C PROPER VALUE: 21°C |

## FIG. 8

SERVER 2

WIDE-AREA COMMUNICATION UNIT 21

DIAGNOSTIC DEVICE 10(11)

1-2 VEHICLE

1-1 VEHICLE

DISPLAY UNIT 50

WIDE-AREA COMMUNICATION UNIT 60

ECU 20

DEVICE 30

DEVICE 30

1-3 VEHICLE

EP 3 567 444 A1

## FIG. 9

# FIG. 10

```
                     START

         ┌──────────────────────────┐  S31
         │ HAS COMMUNICATION WITH   │  YES
       ──┤   SERVER SUCCEEDED?      ├──────────┐
         └──────────────────────────┘          │
               │ NO                             │  S32
               │                  ┌─────────────────────────────┐
               │                  │  ACQUIRE DIAGNOSIS RESULT    │
               │                  │       FROM SERVER            │
               │                  └─────────────────────────────┘
               │                                │
   ┌────────────────────────────┐  S11          │
   │   ACQUIRE DETECTION VALUE   │               │
   │  FROM NEIGHBORING VEHICLE   │               │
   └────────────────────────────┘               │
               │                                 │
   ┌────────────────────────────┐  S12           │
   │  ESTIMATE PROPER VALUE FROM │                │
   │      DETECTION VALUE OF     │                │
   │     NEIGHBORING VEHICLE     │                │
   └────────────────────────────┘                │
               │                                  │
   ┌────────────────────────────┐  S13            │
   │ HAS DETECTION VALUE OF HOST │  NO             │
   │  VEHICLE BEEN DIVERGED FROM ├────────┐        │
   │       PROPER VALUE?         │        │        │
   └────────────────────────────┘        │        │
               │ YES                      │        │
   ┌────────────────────────────┐  S14    │        │
   │ DETERMINE THAT THERE IS SIGN│        │        │
   │      OF ABNORMALITY         │        │        │
   └────────────────────────────┘        │        │
               │                    ┌──────────────────────────┐  S15
               │                    │ DETERMINE THAT THERE IS NO│
               │                    │    SIGN OF ABNORMALITY    │
               │                    └──────────────────────────┘
               │                          │
               └──────────────────────────┘
                         │
                       END
```

# FIG. 11

```
                    ( START )
                        │
                        ▼
        ┌─────────────────────────────┐  S31
        ◁ HAS COMMUNICATION WITH      ▷──── YES
        ◁   SERVER SUCCEEDED?         ▷        │
        └─────────────────────────────┘        │
                        │                       ▼
                       NO          ┌──────────────────────────────┐  S32
                        │          │  ACQUIRE DIAGNOSIS RESULT     │
                        │          │      FROM SERVER              │
                        │          └──────────────────────────────┘
                        ▼                                │
        ┌─────────────────────────────┐  S11            │
        │  ACQUIRE DETECTION VALUE     │                 │
        │  FROM NEIGHBORING VEHICLE    │                 │
        └─────────────────────────────┘                 │
                        │                                │
                        ▼                                │
        ┌─────────────────────────────┐  S121           │
        ◁  IS NUMBER OF NEIGHBORING    ▷──── NO          │
        ◁  VEHICLES EQUAL TO OR LESS   ▷      │          │
        ◁    THAN THRESHOLD VALUE?     ▷      │          │
        └─────────────────────────────┘      │          │
                        │                     │          │
                       YES                    │          │
                        ▼                     │          │
        ┌─────────────────────────────┐  S122 │          │
        │  ACQUIRE PROPER VALUE FROM   │      │          │
        │    NEIGHBORING VEHICLE       │      │          │
        └─────────────────────────────┘      │          │
                        │                     │          │
                        ▼                     │          │
        ┌─────────────────────────────┐  S123 │          │
        │  CALCULATE SENSOR RELIABILITY│      │          │
        │  OF NEIGHBORING VEHICLE FROM │      │          │
        │  DETECTION VALUE AND PROPER  │      │          │
        │  VALUE OF NEIGHBORING VEHICLE│      │          │
        └─────────────────────────────┘      │          │
                        │                     │          │
                        ▼                     │          │
        ┌─────────────────────────────┐  S124 │          │
        │  ESTIMATE PROPER VALUE FROM  │      │          │
        │  DETECTION VALUE AND SENSOR  │      │          │
        │  RELIABILITY OF NEIGHBORING  │      │          │
        │         VEHICLE              │      ▼          │
        └─────────────────────────────┘  ┌──────────────────────────┐ S125
                        │                 │ ESTIMATE PROPER VALUE FROM│
                        │                 │ DETECTION VALUE OF        │
                        │                 │ NEIGHBORING VEHICLE       │
                        │                 └──────────────────────────┘
                        ▼◄───────────────────────┘          │
        ┌─────────────────────────────┐  S13               │
        ◁  HAS DETECTION VALUE OF HOST ▷──── NO             │
        ◁  VEHICLE BEEN DIVERGED FROM  ▷      │             │
        ◁      PROPER VALUE?           ▷      │             │
        └─────────────────────────────┘      │             │
                        │                     │             │
                       YES                    │             │
                        ▼                     │             │
        ┌─────────────────────────────┐  S14  │             │
        │  DETERMINE THAT THERE IS     │      │             │
        │  SIGN OF ABNORMALITY         │      ▼             │
        └─────────────────────────────┘  ┌──────────────────────────┐ S15
                        │                 │ DETERMINE THAT THERE IS   │
                        │                 │ NO SIGN OF ABNORMALITY    │
                        │                 └──────────────────────────┘
                        │                          │               │
                        ▼◄─────────────────────────┘◄──────────────┘
                    ( END )
```

Europäisches
Patentamt

European
Patent Office

Office européen
des brevets

## EUROPEAN SEARCH REPORT

Application Number

EP 19 16 9949

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/114383 A1 (BOSS GREGORY J [US] ET AL) 26 April 2018 (2018-04-26) * the whole document * | 1-11 | INV. G05B23/02 B60W50/00 G07C5/00 |
| X | US 2015/161830 A1 (LENHARDT HEIKO [DE] ET AL) 11 June 2015 (2015-06-11) * the whole document * | 1-11 | |
| X | WO 2017/189361 A1 (PCMS HOLDINGS INC [US]) 2 November 2017 (2017-11-02) * the whole document * | 1-11 | |
| X | US 2017/352201 A1 (KUMABE SEIGOU [JP]) 7 December 2017 (2017-12-07) * the whole document * | 1,8-11 | |
| A | WO 2018/037493 A1 (MITSUBISHI ELECTRIC CORP [JP]) 1 March 2018 (2018-03-01) * paragraphs [0135] - [0139] * | 10 | |

TECHNICAL FIELDS
SEARCHED      (IPC)

G05B
G07C
B60W

The present search report has been drawn up for all claims

| Place of search | Date of completion of the search | Examiner |
|---|---|---|
| Munich | 1 October 2019 | Schriefl, Josef |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 19 16 9949

This annex lists the patent family members relating to the patent documents cited in the above-mentioned European search report.
The members are as contained in the European Patent Office EDP file on
The European Patent Office is in no way liable for these particulars which are merely given for the purpose of information.

01-10-2019

| Patent document cited in search report | Publication date | Patent family member(s) | Publication date |
|---|---|---|---|
| US 2018114383 A1 | 26-04-2018 | US 2018114383 A1<br>US 2019005748 A1 | 26-04-2018<br>03-01-2019 |
| US 2015161830 A1 | 11-06-2015 | DE 102013225563 A1<br>US 2015161830 A1 | 11-06-2015<br>11-06-2015 |
| WO 2017189361 A1 | 02-11-2017 | NONE | |
| US 2017352201 A1 | 07-12-2017 | CN 107111935 A<br>DE 112015005917 T5<br>JP 6485049 B2<br>JP 2016128985 A<br>SG 11201703173Q A<br>US 2017352201 A1<br>WO 2016110915 A1 | 29-08-2017<br>21-09-2017<br>20-03-2019<br>14-07-2016<br>29-06-2017<br>07-12-2017<br>14-07-2016 |
| WO 2018037493 A1 | 01-03-2018 | CN 110268412 A<br>DE 112016007088 T5<br>JP 6395992 B2<br>JP WO2018037493 A1<br>US 2019171818 A1<br>WO 2018037493 A1 | 20-09-2019<br>11-04-2019<br>26-09-2018<br>22-11-2018<br>06-06-2019<br>01-03-2018 |

EPO FORM P0459

For more details about this annex : see Official Journal of the European Patent Office, No. 12/82

**EP 3 567 444 A1**

## REFERENCES CITED IN THE DESCRIPTION

**Patent documents cited in the description**

- JP 2013008111 A
- JP 2011185727 A
- JP 2016128985 A